# EUROPEAN PATENT SPECIFICATION

(11) **EP 4 200 207 B1**
(45) Date of publication and mention of the grant of the patent: **12.11.2025**
(21) Application number: 21786536.9
(22) Date of filing: 23.08.2021
(51) Int. Cl.: B64C 13/04, B64C 27/56, B64D 11/06, B60N 2/75, B64C 13/12

(54) **HELICOPTER COLLECTIVE CONTROL APPARATUS**
HUBSCHRAUBER-KOLLEKTIVSTEUERGERÄT
APPAREIL DE COMMANDE COLLECTIVE D'HÉLICOPTÈRE

(30) Priority: 21.08.2020 GB 202013134
(43) Date of publication of application: 28.06.2023
(73) Proprietor: Hill Group Technologies Limited, Stafford Staffordshire ST16 1GY (GB)
(72) Inventor: HILL, Jason, Rugeley Staffordshire WS151UZ (GB)
(74) Representative: IK-IP LTD
(86) International application number: PCT/GB2021/052179
(87) International publication number: WO 2022/038381

(56) References cited:
- EP-A1- 0 413 656
- GB-A- 2 073 114
- US-A- 2 272 817
- US-A- 5 472 156
- US-A1- 2013 206 900
- US-B2- 10 683 100

## Description

### FIELD OF THE INVENTION

The present application relates to control apparatus for aircraft. In particular, the application relates to collective control apparatus for helicopters to allow pilot control of the collective pitch of a helicopter's blades.

### BACKGROUND OF THE INVENTION

The collective pitch of all the rotor blades in a helicopter can be altered synchronously, or collectively, with the same change in pitch to each of the blades being effected simultaneously, regardless of where the blades are in their rotation. This can cause the helicopter's vertical position to change, i.e. for the helicopter to ascend or descend.

Traditionally, especially in smaller helicopters, collective control is provided by a collective handle to the left of the pilot's seat. The collective handle acts like a lever. It is pivoted at its base and can be raised and lowered by rotating about its base to adjust the pitch angle of the helicopter rotor blades.

Mechanical linkages or electronic signalling from the collective handle transmit changes in positioning of the collective handle to the swashplate of the helicopter control mechanism to effect changes in the collective pitch of the helicopter blades.

In some helicopters the collective handle also includes a throttle control to adjust engine power to increase or decrease the rotation rate (rpm, or revolutions per minute) of the main rotor. The throttle control is generally in the form of a rotatable grip on the collective handle. Rotating the throttle grip in a first direction (generally away from the pilot, or anti-clockwise from the viewpoint of the pilot) increases the rpm and rotating the throttle grip in a second, opposing direction (generally towards the pilot, or clockwise from the viewpoint of the pilot) decreases the rpm.

Many aircraft have dual controls, allowing two pilots the ability to control the aircraft. In helicopters the two pilots generally sit next to one another. In light dual-control aircraft, particularly helicopters, the second set of controls may be removable if not required during single pilot operation. For helicopters the pilot controls tend to be on the right-hand side of the cockpit, whilst the auxiliary (removable) controls tend of be on the left-hand side whereas for fixed wing the pilot controls are on the left.

In larger aircraft cockpits tend to be large and controls are generally substantially assisted with hydraulics or may be fly by wire and there are plenty of options for both placing and configuring the controls.

In lighter aircraft, the two sets of controls (for pilot and co-pilot) are generally mechanically linked both to each other and to the ultimate aircraft control actuators. This is generally the case even when (as is typically the case in a light helicopter, but less common in a light aircraft) the controls are assisted by hydraulic servos to reduce pilot load. Mechanically linking main (pilot) and auxiliary (co-pilot) controls together and to aircraft actuators limits options for positioning the controls, especially with very the tight weight and space constraints in small aircraft.

US 2013/206900 discloses a control assembly that includes a post, a grip, and a hand rest. The post has a top, a bottom, and a body joining the top to the bottom. The grip is positioned at least partially above the post and is movable along at least one arc. The hand rest is coupled to the top and comprises an upper surface having a profile corresponding to the at least one arc.. US 5,472,156 discloses an air combat control head with an extension that provides a head for a collective control stick wherein system control switches may be located for easy access by the operator and an extension comprising a phenolic coated hand grip and a bottom tube component. The hand grip is offset laterally and longitudinally from the bottom tube component, and the head is canted back toward the operator, making the system control switches workable by the operator's thumb while the rest of the operator's hand grips the stick and maintains control of the collective pitch of the main rotor blades.. EP 0 413 656 discloses a helicopter programmable collective control system that includes a motorized collective control stick used in conjunction with a multi-axis control stick, with the multi-axis control stick as the default collective controller. A collective control signal processor reads collective input the pilot is giving through one of the two control sticks and provides a motor drive signal (which is dampened to prevent over control) to position the collective control stick. GB 2 073 114 discloses a four axis force stick that provides signals indicative of force applied to the stick in an axis corresponding to a control axis of an aircraft, including pitch, roll, yaw and lift/speed. The force-related signals are applied through proportional and integral gain signal paths to operate electrohydraulic servos that control the aerodynamic surfaces of the aircraft, such as the cyclic and collective blade pitch of the main rotor and the tail rotor blade pitch of a helicopter, or the ailerons, rudder, elevator and thrust of a fixed wing aircraft.. US 10,683,100 discloses a pilot seat, comprising a contoured structure having ergonomically formed and padded surfaces, with left and right arm supports that include an articulated control knob, movable in three rectangular axes and rotatable about a vertical axis to provide one or more aircraft steering functions for an aircraft, and a touch-sensitive control surface for controlling one or more power system components.

### SUMMARY OF THE INVENTION

Aspects of the invention are set out in the independent claims and preferable features are set out in the dependent claims.

There is described herein a collective control arrangement for a helicopter having a plurality of rotor blades, the collective control arrangement comprising: an armrest for a pilot's seat, the armrest comprising an elongate channel, wherein the elongate channel is arranged to be disposed substantially parallel to a longitudinal axis of the helicopter when installed and is formed in a face of the armrest that is substantially vertical when installed in the helicopter; and a collective handle comprising: a first end slidably disposed in the elongate channel for coupling to one or more helicopter actuators that control collective pitch of the plurality of rotor blades; and a second end for gripping by a pilot; wherein the collective handle and elongate channel are arranged such that the collective handle projects substantially horizontally from the armrest.

The collective pitch of the helicopter rotor blades can thus be adjusted by moving the collective handle back and forth along the channel.

By providing a collective handle slidably disposed in the pilot's armrest, ergonomic improvements can be made. For example, the pilot can easily grip and control the collective handle from a relaxed position with their arm resting on the armrest. Furthermore, by providing a collective control means that is slidable within a channel, more precise control of the collective pitch of the rotor blades of the helicopter may be achieved compared to a conventional lever-based collective that is controlled by pivoting about its base. For example, the distance of travel of the handle along the channel may be a simple indication for the pilot of how far the pitch angle is from the maximum and/or minimum pitch angles.

The elongate channel may be between around 5cm and 60cm in length, preferably between around 10cm and 50cm in length. More preferably, the elongate channel is around 20cm to 40cm in length, preferably 25 cm to 35cm. Such lengths permit fine tuning of the collective pitch by the pilot, whilst being within a comfortable range of movement for the pilot's arm as they move the handle.

References to up, down, side-to-side, transverse, forward and back, vertical or horizontal are all with reference to the frame of reference of the helicopter when facing in a conventional, forward direction of travel. Thus the relative positioning and/or orientation of some items is described in the context of when the arrangement is installed or fixed in a helicopter which is normally oriented in an upright position, with the main rotorblades above the body of the helicopter and the pilot facing the forward direction of travel.

Thus the collective handle can be operated whilst the pilot maintains their elbow comfortably supported on the backward elbow support portion. The elbow support portion may be substantially horizontal when fitted in the helicopter.

The elongate channel and the collective handle may be sized and shaped such that the collective handle lies below the height of the elbow support portion when the collective control arrangement is installed in the helicopter.

The elongate channel can be formed in a face of the armrest that is substantially vertical when installed in the helicopter.

Preferably the armrest further comprises an upper armrest portion positioned adjacent and slightly above the elongate channel. The upper armrest portion may have a length of at least 15cm, preferably at least 20cm or at least 25cm. The upper armrest portion may be provided forward of the elbow support portion (where an elbow support portion is present). The upper armrest portion gives the pilot the freedom to slide their forearm along the armrest as they move the moveable handle. The upper armrest portion provides arm support irrespective of collective position, or whether the pilot is using the collective, a control panel or user interface portion (where present) or at rest.

Generally the armrest will be located in the central portion of the helicopter cabin, on the left hand of the pilot, so the face of the armrest will face right. The collective handle may thus be positioned in an armrest recess.

The length of the collective handle may be between around 5cm and 30cm, preferably between around 10cm and 20cm.

The elongate channel may thus follow a path that goes generally from backwards in the helicopter to further forwards in the helicopter (forwards being the direction of normal forward travel of the helicopter).

The coupling can be configured such that moving the collective handle backwards (or aft) in the helicopter increases the collective pitch of the blades and moving the collective handle forwards (fore or fwd) in the helicopter increases the collective pitch of the blades.

Optionally the elongate channel is curved.

This may make the handle more ergonomic and easier for the pilot to use.

In preferred embodiments, the curvature of the elongate channel is such that the channel is lower at the front and/back end of the channel and higher around the middle of the channel. Thus the collective handle would rise slightly as it is moved backwards and forwards and be lowest at the beginning or end of its travel. This may, for example, make it slightly easier to move the handle towards the start and end of its travel.

Curving the elongate channel also means the collective handle can be fitted to a connector such as a pivoted rod, in order to couple the collective handle to the aircraft actuators.

The radius of curvature of the elongate channel (or effective curvature of the arc made by the collective handle) may be around 40cm. Preferably the radius of curvature is between 25cm and 100cm, or between 30cm and 80cm. In some embodiments the curvature is at least 40cm, preferably between around 40cm and 60cm.

However in some embodiments the elongate channel may be straight.

Optionally the arrangement further comprises a support arm connected to the first end of the collective handle for coupling the collective handle to the one or more helicopter actuators that control collective pitch of the plurality of rotor blades.

The support arm may be attached to the first end of the collective handle directly, or may be attached indirectly, through an intermediate coupling mechanism or joint.

Preferably the support arm extends generally downwards from the collective handle when installed in the helicopter, preferably wherein the support arm is of sufficient length to extend below the floor level of the cockpit of the helicopter.

For example, the support arm may be around 50cm in length. Preferably the supoprt arm is between around 20cm and 100cm in length, more preferably between around 40cm and 80cm in length.

By extending the support arm to below the floor of the cockpit, further control connectors can be connected to it that extend backwards in the helicopter to allow easy connection to the rotor head of the helicopter, which is generally behind the pilot.

In some embodiments the support arm is pivotally fixable in the helicopter when installed, such that the support arm pivots as the collective handle is slid in the elongate channel.

Where a straight, rather than curved or arcuate, elongate channel is used, the support arm may be slidably attached to the end of the collective handle such that the collective handle moves up and down the length of the support arm as it is moved in the channel to allow the support arm to pivot but the collective handle to move in a linear motion.

Preferably the support arm is substantially hidden or obscured by the armrest. This may provide improved safety.

In some embodiments the armrest is arranged to be disposed centrally in a cabin of the helicopter.

Thus in a conventional helicopter (where the main or primary pilot sits on the right hand side of the cabin), the armrest is a left armrest.

Disposing the collective control arrangement centrally reduces knocking of the arrangement as pilot or passenger enter or exit the helicopter. By centrally, it is meant away from the sides of the helicopter, such as in a central position between two adjacent seats.

Preferably the armrest further comprises one or more user interface buttons adjacent the elongate channel for receiving pilot input.

The buttons may, for example, control a radio communication system, transponder, altimeter settings and/or autopilot functions of the helicopter.

This positioning of the user interface buttons adjacent the elongate channel improves switching between moving the collective handle and using the user interface button(s). In preferred embodiments the button(s) and the elongate channel are located forward of the elbow support, which means the pilot can easily reach both the collective handle and the user interface button(s) while resting their elbow on the elbow support.

It has been found that providing a conventional collective that operates as a lever for a co-pilot in conjunction with the novel armrest and collective handle arrangement for a pilot provides an improved user experience. For example, if a co-pilot collective were integrated in an armrest for the co-pilot (and maintaining traditional convention that collective controls are operated by left hand), the co-pilot armrest would impede entry into or exit from the helicopter by the co-pilot.

Preferably this further collective handle is removable from the coupling mechanism, to allow it to be removed from the helicopter, for example for when only a single pilot is required so the co-pilot seat can be used for a passenger.

Preferably the further collective handle is spaced apart from the first, or main, collective handle, such that it can be located to the left of a co-pilot seated to the left of the pilot.

There is also described herein: a collective control arrangement for a helicopter having a plurality of rotor blades, the collective control arrangement comprising: a first collective handle arranged to be moved translationally along a substantially linear or arc-shaped path; and a second collective handle for a co-pilot arranged to be moved by pivoting about a pivot point; and a coupling arrangement for coupling the first collective handle and the second collective handle to one or more helicopter actuators that control collective pitch of the plurality of rotor blades, such that both translational movement of the first collective handle and the pivoting movement of the second collective handle can effect control of the one or more helicopter actuators that control collective pitch of the plurality of rotor blades, wherein the pivot point of the second collective handle is aft of a pivot point associated with the first collective handle. The pivot point associated with the first collective handle is a pivot point about which a support arm connected to the first collective handle is pivoted. In preferred embodiments the pivot point of the further or second collective handle is between around 25cm and 75cm backward of the pivot point associated with the first collective handle, more preferably between around 30cm and 60cm.

Preferably the arrangement further comprises a horizontally disposed torque tube coupled to the further or second collective handle and to a control rod coupled to the first collective handle. The horizontally disposed torque tube may be coupled to the control rod using a bell crank. This allows the motion from either of the collectives to be used to control the aircraft actuators. Preferably the torque tube is disposed transversely across the aircraft from side to side.

A preferred embodiment provides a conventional collective lever for the co-pilot wherein the pivot point is substantially further aft than that of the pilot's seat, typically between 25cm and 75cm. The conventional collective lever may be arranged such the motion of a handle of the lever is substantially vertical, preferably with the mid-height of travel aligning approximately with the top of the co-pilots seat cushion. A horizontally disposed torque tube attached to the conventional collective lever carries the rotational motion back to a bell-crank on a primary control run connected to the pilot collective handle - hence providing direct connection between the controls.

The co-pilots collective lever may be removable, such that it can be removed when the aircraft is being flown by a single pilot.

In some embodiments the coupling arrangement includes a gearing arrangement to compensate for a difference in magnitude of the movement of the two collective handles. For example, the second collective handle may be constrained to pivot through an angle of around 45 degrees, whereas the first collective handle may be attached (as mentioned above) to a support arm that pivots about an angle of around 30 degrees as the first collective handle moves in the linear or arc-shaped path. A gearing arrangement may be required to ensure the full movement of the two handles is converted into the same range of pitch control for the rotor blades.

There is also described herein: a helicopter cabin for a helicopter having a plurality of rotor blades, wherein the helicopter cabin is fitted with the collective control arrangement substantially as described above.

There is also described herein: a helicopter having a plurality of rotor blades and fitted with the collective control arrangement substantially as described above.

### BRIEF DESCRIPTION OF THE FIGURES

Systems and method for helicopter control are described by way of example only, in relation to the Figures, wherein:
Figure 1a shows an example aircraft, in particular a helicopter;
Figure 1b shows the helicopter of Figure 1a with reference to its turning axes;
Figure 2 shows an example pitch control system for an aircraft, in particular a helicopter;
Figure 3 shows an example pilot control arrangement from an above perspective view;
Figure 4 shows an example pilot control arrangement from a side view.
Figure 5 shows an example pilot control arrangement positioned in a helicopter from an above perspective view;
Figure 6 shows an example helicopter cabin having a pilot control arrangement from an above perspective view;
Figure 7 shows a cross-sectional view of an example helicopter cabin having a pilot control arrangement from the side;
Figure 8 shows a perspective view of an example helicopter cabin having a pilot control system from above; and
Figure 9 shows an example pilot input arrangement having two collectives from an above perspective view.

### DETAILED DESCRIPTION

### Example Aircraft

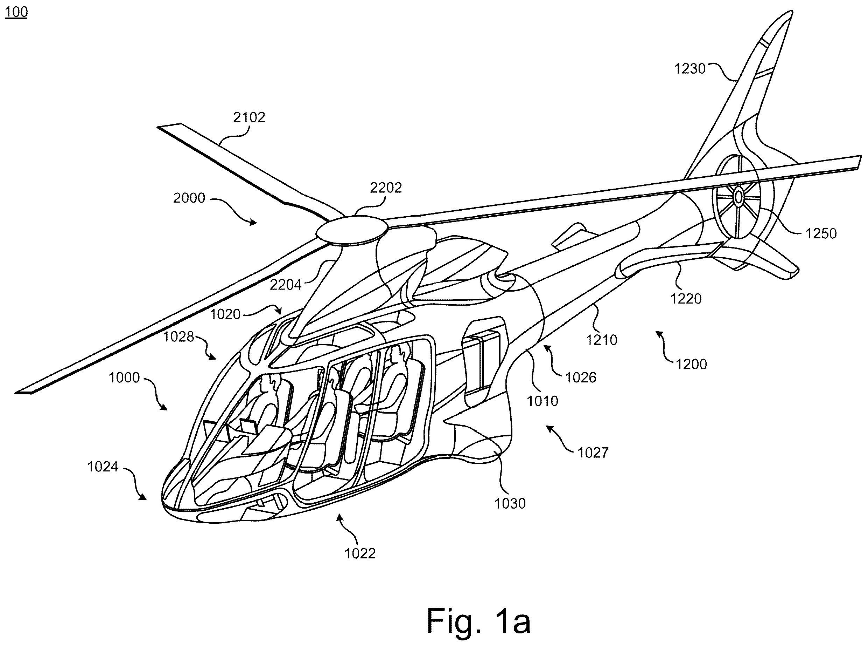

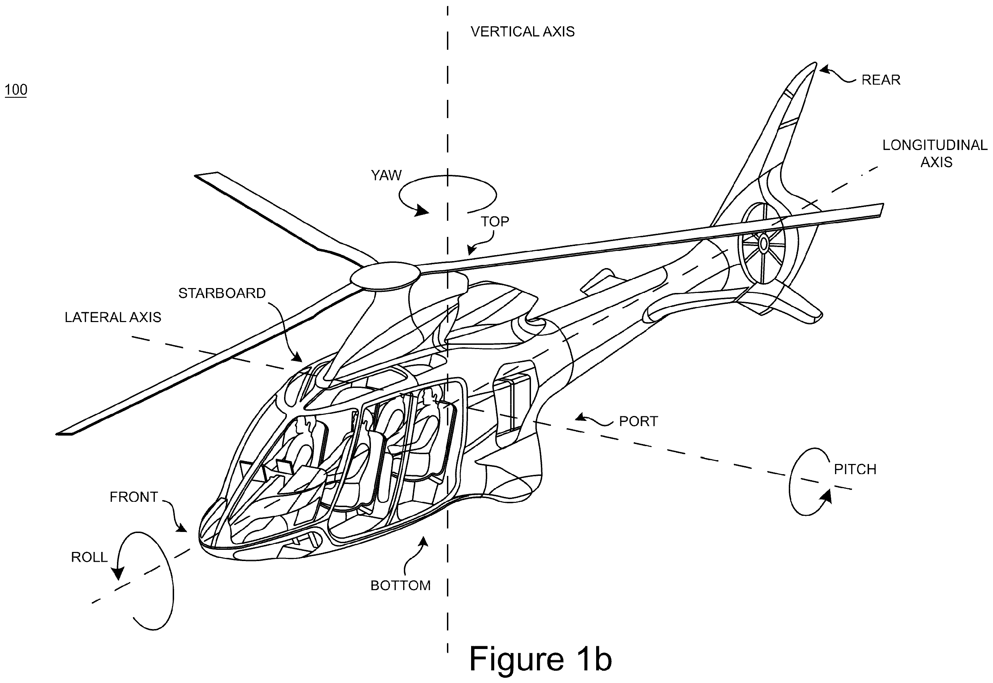

Referring to Figures 1a and 1b, a helicopter 100 will now be described.

The helicopter 100 has an aerodynamic fuselage 1000, a tail boom assembly 1200, a main rotor assembly 2000, a power plant 3000 and a landing gear arrangement 4000. The fuselage 1000 comprises a shell 1010, where the shell 1010 defines a top 1020, bottom 1022, front 1024, rear 1026, left 1027 and right 1028 of the fuselage 1000. The fuselage 1000 also has a length 1002 from the front 1024 to the rear 1026, and a maximum width 1004.

Referring to Figure 1b, the helicopter 100 has a front, rear, left, right, top and bottom. The left and right may alternatively be referred to as port and starboard respectively. The helicopter 100 has a longitudinal axis, a lateral axis and a vertical axis. The longitudinal axis extends between the front and the rear of the helicopter 100. The lateral axis extends between the left and the right of the helicopter 100. A direction parallel to the lateral axis is a transverse direction, and in forward flight is generally horizontal and perpendicular to the direction of forward travel. An outward direction is substantially parallel to the lateral axis and away from the longitudinal axis. An inward direction is substantially parallel to the lateral axis and towards the longitudinal axis. The vertical axis extends between the top and the bottom of the helicopter 100. In forward flight, the vertical axis is substantially vertical and perpendicular to the direction of forward travel.

Standard aeronautical terms aft and fwd are used. Aft or rearward is used here to mean towards the rear of the helicopter 100 or away from the direction of forward travel. Fwd, fore or forward, is used here to mean towards the front of the helicopter 100 or towards the direction of forward travel.

A first component forward of or in front of a second component is positioned closer to the front of the helicopter 100 along the longitudinal axis than the second component, although is not necessarily positioned on the longitudinal axis itself. Similarly, a first component backward of or behind a second component is positioned closer to the rear of the helicopter 100 along the longitudinal axis than the second component, although is not necessarily positioned on the longitudinal axis itself. A first component upward of or above a second component is positioned closer to the top of the helicopter 100 along, although not necessarily on, the vertical axis than the second component. Similarly, a first component below, beneath, under or downward of a second component is positioned closer to the bottom of the helicopter 100 along the vertical axis than the second component.

Pitch of the helicopter 100 is a rotation of the helicopter 100 about the lateral axis. Yaw of the helicopter 100 is a rotation of the helicopter 100 about the vertical axis. Roll of the helicopter 100 is a rotation of the helicopter 100 about the longitudinal axis.

The helicopter 100 has a centre of gravity (CoG) or centre of mass (CoM), defined as a point in 3-dimensional space about which the weight of the helicopter 100 applies no moment force or torque. Optionally the centre of mass can be the intersection of the longitudinal, lateral and vertical axes. Rotor blades of the main rotor assembly have a centre of rotation in a plane of rotation at a rotor head location. The rotor head location can act as a datum location from which the location of other components of or positions in the helicopter 100 are referenced. The helicopter 100, when empty, may have a nominal centre of mass at a location longitudinally near to the rotor head location.

The helicopter 100 has landing gear (not shown) to support the helicopter 100 when on the ground. The landing gear may be fixed or retractable and may include skids or wheels. The landing gear provides a base for the helicopter 100 when on the ground, vertices of the base defined by points of contact between the landing gear and the ground.

### Changing Aircraft Orientation and Positioning

Pitch control in helicopters is transferred to the rotor blades via a swashplate arrangement, which generally comprises a stationary swashplate and a rotating swashplate. The stationary swashplate is tiltable in all directions and can move vertically. Actuators connected (mechanically or electronically) to the user controls cause the movement of the stationary swashplate. Where autopilot is available, the autopilot computer system can also control the actuators. The rotating swashplate is connected to the stationary swashplate such that up/down and tilting movements of the stationary swashplate are transferred to the rotating swashplate, and thence to the rotor blades.

Referring to Figure 1a again, a pilot can provide cyclic and collective control inputs to control the helicopter 100 in flight. The main rotor assembly 2000 comprises rotor blades 2102 coupled to and configured to rotate with a central hub about an axis of rotation provided by a rotor mast extending from the top 1020 of the fuselage. The is hub enclosed by a rotor head fairing 2202. Each blade 2102 is configured to rotate at the root about its length so as to change its angle of attack. An upper swashplate and a lower swashplate are disposed about the mast and are arranged such that they collectively tilt and move up and down the mast. The upper swashplate rotates with the blades 2102 and has an upper control link coupled to each rotor blade 2102 to cause each rotor blade 2102 to twist about its length.

The lower swashplate is non-rotating and receives control input from the pilot's cyclic and collective controls, wherein a cyclic control input causes the lower swashplate to tilt and a collective control input causes the lower swashplate to move up or down the mast. Such tilting or movement is replicated in the upper swashplate, causing the angle of attack and therefore lift force generated by each blade 2102 to change. The tilt of the lower swashplate may also be described as a rotation of the lower swashplate about its lateral and longitudinal axes.

A cyclic input causes the swashplates to tilt, meaning the pitch of each blade 2102 varies as it rotates around the hub between a maximum at the azimuth corresponding to the highest point of the lower swashplate, and a minimum at the azimuth corresponding to the lowest point of the lower swashplate. By way of example, the pilot may provide a longitudinal cyclic input by moving a cyclic control towards the front (fwd) or the rear (aft) of the helicopter 100, thus tilting the swashplates causing the rotor blades 2102 to achieve a maximum lift when towards the rear or front respectively and a minimum lift when towards the front or rear respectively. This varies the fwd and aft movement of the helicopter 100 and induces a change in pitch of the front 1024 or nose of the helicopter 100 (downwards when moving fwd or forwards, upwards when moving aft or backwards). In forward flight, longitudinal cyclic control input can be used to adjust the forward speed and thus pitch of the helicopter 100. Similarly, a lateral cyclic input to the left 1027 or right 1028 tilts the swashplates laterally, causing the helicopter to move towards the left 1027 or right 1028. This induces roll, i.e. rotation about a longitudinal axis of the helicopter 100, to the left 1027 or right 1028.

A collective input provides a uniform change in pitch for all of the blades 2102, resulting in an overall change in lift for the helicopter 100. In a hover or level flight, an increased collective input therefore causes the helicopter 100 to climb vertically or upwards, and a decreased collective input causes the helicopter 100 to descend vertically or downwards. In pitched (forward) flight, a collective input can be used to vary the speed of the helicopter 100 without varying the pitch of the helicopter 100, but will induce an ascent or descent.

Further, anti-torque control input provided by the pilot, typically via left and right pedals, controls the angle of attack of tail rotor blades in the tail rotor assembly 1200. This varies the torque applied by a tail rotor 1250, so can be used to adjust the yaw or yaw rate (i.e. the bearing direction) of the helicopter 100 in hover. In forward flight, an anti-torque control input varies the side-slip angle of the helicopter 100, i.e. the angle between the direction of travel and the heading of the helicopter 100. Cyclic, collective and anti-torque controls can be used in any combination to achieve a range of manoeuvres and flying conditions.

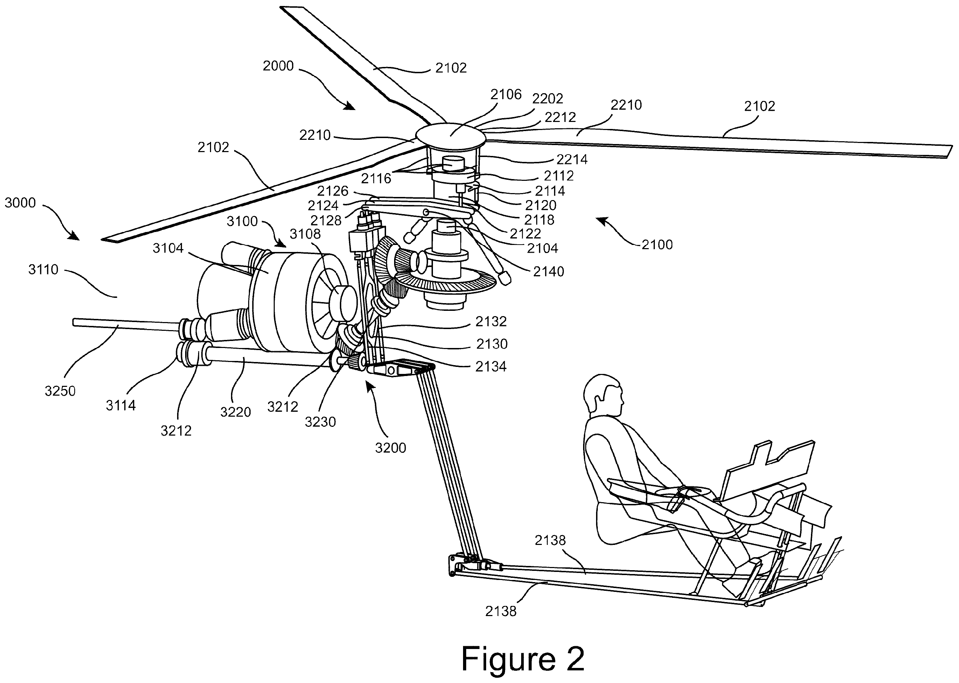

Referring to Figure 2, a control system for a helicopter will now be described. This control system may be used in the helicopter 100 of Figures 1a and 1b.

The main rotor assembly 2000 comprises a rotor control assembly 2100, which includes the mechanical components for translating the input from a main rotor gearbox 3240 into rotation of the blades 2102, and the rotor fairing assembly 2200 which provides protection to the rotor control assembly 2100.

The rotor control assembly 2100 comprises at least two blades 2102. In this embodiment the rotor control assembly 2000 comprises three blades 2102. The blades 2102 are positioned at equal spacing (i.e. 120° apart) around the rotor mast 2104 so that the thrust vector is stable.

The blades 2102 are connected to the rotor hub 2106. In this embodiment, the rotor control assembly 2100 comprises a "fully articulated" structure, which is a known structure in helicopter dynamics, comprising a flapping hinge 2146 and a lead-lag hinge 2144.

The rotor hub 2106 is mounted onto the top end of the rotor mast 2104. The rotation of the rotor mast 2104 is therefore directly inputted into the rotor hub 2106 and consequently the blades 2102.

Upper control links 2116 are connected at a first end to the rotor hub 2016. The number of upper control links 2116 is determined by the number of blades 2102, therefore, in this embodiment, the number of upper control links 2116 is three. In this embodiment, the rotor hub 2106 comprises a strap arrangement in which the rotor hub straps 2108 wrap over rotor hub bars 2110. The upper control links 2116 connect to the rotor hub straps 2108 and the input from the upper control links 2116, either up or down, causes the strap to twist the rotor hub bars 2110. As the rotor hub bars 2110 are connected to the blades 2102, the twisting of the rotor hub bars 2110 causes the blades 2102 to twist.

The upper control links 2116 are connected at a second end to the swashplate arrangement, specifically, to the upper swashplate 2112. In this embodiment, the three upper control links 2112 are positioned at equal spacing (120° apart) around the rotor mast 2104 so that the upper control links 2112 align with a part of the blades 2102.

The upper swashplate 2112 rests upon the lower swashplate 2114. The swashplate arrangement 2112, 2114 is free to move vertically up or down (due to collective input), and tilt around the rotor mast 2104 (due to cyclic input). The input from the swashplate arrangement 2112, 2114 can cause the upper control links 2116 to move vertically. If the swashplate 2112, 2114 moves purely vertically then all the upper control links 2116 will move cooperatively. If the swashplate 2112, 2114 tilts then upper control links 2116 will move in different directions. The further the upper control link 2116 moves, the further the connected blade 2102 tilts. If the blade 2102 is tilted up, then the angle of attack increases which can result in an increase in lift coefficient.

The difference in blade 2102 angle of attack at different azimuthal positions can enable the helicopter 100 to direct the thrust in a tilted direction, and this enables the helicopter 100 to move in a different direction other than vertically (due to cyclic input).

Similar reasoning can be applied if the swashplate 2112, 2114 is moved vertically without tilting the angle. If the swashplate 2112, 2114 is raised vertically then the angle of attack on all blades 2102 will increase by the same amount resulting in an increase in lift (due to collective input).

The rotor control assembly 2100 also comprises at least one lower control link(s) connected at a first end to the lower swashplate 2114. In the illustrated embodiment, three lower control links 2118, 2120, 2122 provide the input into the lower swashplate 2114 either to move the swashplate 2112, 2114 vertically or to tilt the angle, as mentioned above. In this embodiment, the lower control link 2118, 2120, 2122 can only move vertically. The lower control link 2118, 2120, 2122 can move cooperatively to move the swashplate 2112, 2114 vertically or move by different amounts to tilt the swashplate 2112, 2114.

The lower control links 2118, 2120, 2122 are connected at a second end to corresponding control arms 2124, 2126, 2128. The control arms 2124, 2126, 2128 provide the input into the lower control links 2118, 2120, 2122 by moving the second end of the lower control links 2118, 2120, 2122 vertically.

The control arms 2124, 2126, 2128 are connected at a second end to control bars 2130, 2132, 2134. The control bars 2130, 2132, 2134 provide the input into the control arms 2124, 2126, 2128 by moving the second end of the control arms 2124, 2126, 2128 vertically.

The control bars 2130, 2132, 2134 are connected at a second end to at least one pilot input lever 2138, through which pilot input is transferred to the rotor mast actuators to control collective and cyclic pitch of the helicopter blades.

### Pilot Control Arrangement

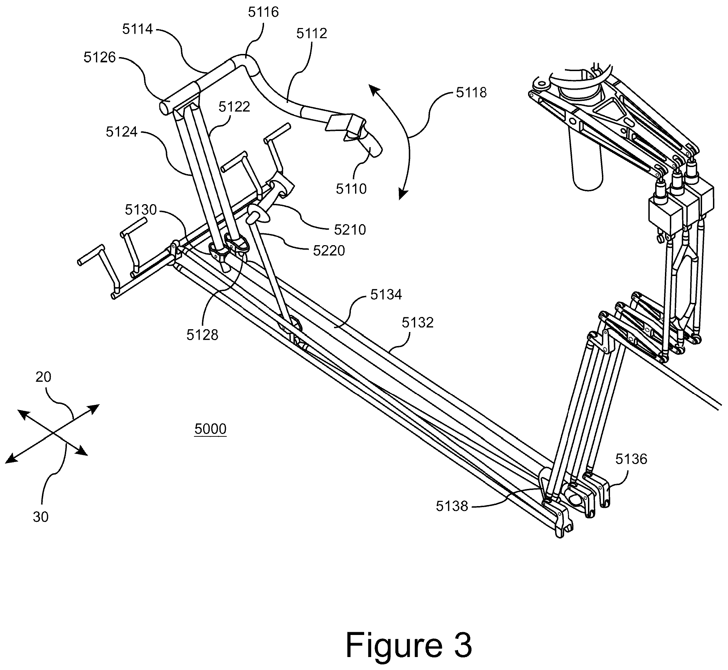

Referring to Figure 3, a pilot control arrangement 5000 for an aircraft that can be used for receiving pilot input will now be described. The pilot control arrangement 5000 of Figure 3 may be used in the control system shown in Figure 2. A first arrow 20 marks the lateral, or transverse direction across the aircraft (side-to-side across the aircraft, if one is facing the direction of normal, forward motion of the aircraft). A second arrow 30 shows longitudinal, or front/back (fore/aft) direction in the reference frame of the aircraft.

The pilot control arrangement 5000 comprises a cyclic handle 5110 arranged to be held by a pilot. The cyclic handle 5110 can be moved by the pilot to control pitch and roll (longitudinal and lateral positioning) of the aircraft. The cyclic handle 5110 is attached to an elongate connector portion 5112 that extends generally forward (or in the fore, or fwd direction) from the cyclic handle 5110. The elongate connector portion 5112 has a distal end at its most forward point in the aircraft. The elongate connection portion 5112 is connected to an elongate transverse arm 5114 that extends transversely across the aircraft. The cyclic handle 5110, elongate connector 5112 and transverse arm 5114 may be integrally formed of a single piece of material, or may be formed of separate parts fixed together.

The transverse arm 5114 is coupled to aircraft actuators that control pitch and roll of the aircraft. The transverse arm 5114 is coupled to these aircraft actuators by a first support arm 5122 for transmitting pitch (longitudinal orientation) control commands to aircraft actuators. The transverse arm 5114 is also coupled to a second support arm 5124 for transmitting roll (lateral orientation) control commands to aircraft actuators.

The longitudinal orientation (or pitch) of the aircraft can be controlled by moving the cyclic handle 5110 forwards and back (in direction marked by arrow 20). Moving the cyclic handle 5110 forwards causes the aircraft to pitch forwards, or in other words brings the nose of the aircraft down compared to the tail. Moving the cyclic handle 5110 backwards causes the aircraft to pitch backwards, or in other words brings the nose of the aircraft up compared to the tail. This can be used to control speed or elevation of the aircraft.

The lateral orientation (or roll) of the aircraft can be controlled by moving the cyclic handle 5110 from side to side (in direction marked by arrow 30). Moving the cyclic handle 5110 right causes the aircraft to tilt towards the right and moving the cyclic handle 5110 left causes the aircraft to tilt towards the left. This can be used to control turning of the aircraft.

The pilot control system 5000 also comprises a collective handle 5210. A first end of the collective handle is supported in an elongate channel 5212. The elongate channel 5212 is substantially horizontal in the aircraft, arranged in a forwards and back (fore and aft) direction. As can be seen, the elongate channel is substantially parallel to the direction of arrow 30 shown in Figure 3. The elongate channel 5212 is formed in an armrest (not shown in Figure 3). The length of the elongate channel 5212 is around 30cm. In preferred embodiments the elongate channel 5212 is between around 25cm and 35cm, which provides a good compromise between being short enough to provide a comfortable range of motion for the pilot's hand movement and being long enough allowing fine tuning of the adjustment.

The collective handle 5210 is coupled to one or more actuators that control pitch of all the blades of the aircraft (helicopter) at the same rate independent of their rotational position to control the lift force. Control of the collective pitch of the blades can allow the pilot to control the helicopter to hover, or descend or ascend vertically, for example. By moving the collective handle 5210 forwards in the aircraft, collective pitch of the rotor blades is reduced, and by moving the collective handle 5210 backwards in the aircraft, collective pitch of the rotor blades is increased.

The collective handle 5210 is coupled to the actuator(s) for collective pitch control via a third support arm 5220 for transmitting collective control commands to aircraft actuators. The third support arm 5220 extends downwards from the collective handle 5210 and is pivoted below the collective handle 5210 at pivot point 5222. Pivot point 5222 is formed by a pin joint made between the third support arm 5220 and a collective support plate (not labelled). The collective support plate is fixed in all degrees of freedom to the fuselage structure of the helicopter.

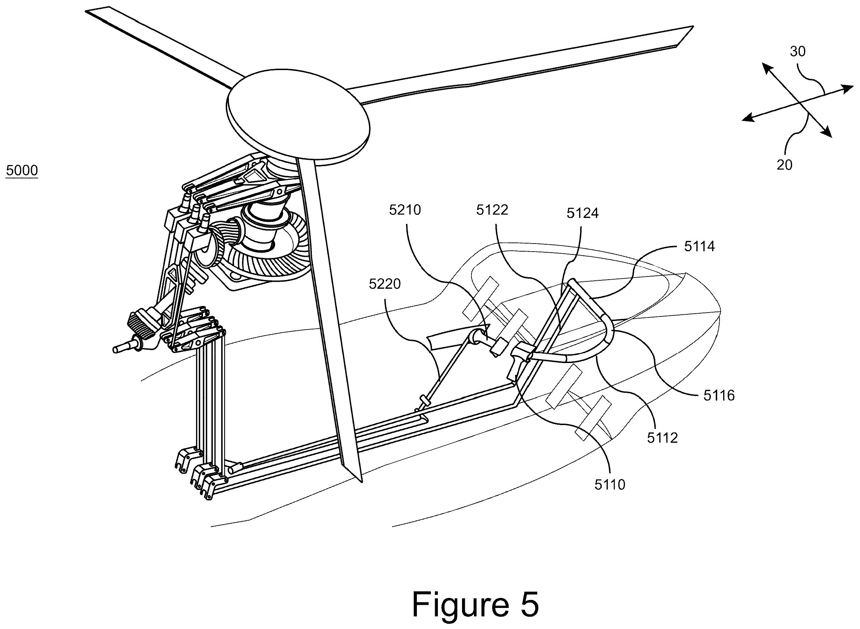

As the collective handle 5210 is moved back and forth along the elongate channel 5212, the third support arm 5220 pivots about its pivot point 5222. As can be seen from Figure 5, the elongate channel 5212, although generally horizontally positioned, has a slight curvature, upwards towards the middle and downwards towards each end. This allows accommodation of the pivoting third support arm 5212.

The length of the third support arm 5220 is around 60cm. The radius of curvature of the elongate channel 5222 is around 55cm.

The pivot point 5222 is closer to the lower end of the third support arm 5220 than to the higher end. Preferably the pivot point 5222 is at least 75% down the length of the third support arm 5220, more preferably at least 80% or at least 85%. This allows a relatively large movement of the collective handle 5210 to be translated into a relatively small movement of the bottom end of the control arm 5220, allowing the pilot more precision over the control of the collective pitch of the rotor blades, whilst requiring less space for the coupling mechanisms that transmit the movement to the collective actuators. The placement of the pivot point 5222 relatively low on the third support arm 5220 also allows the curvature of the elongate channel 5212 to have a fairly large radius, so that the collective handle 5210 does not move substantially in a vertical direction. This can be more ergonomic for the pilot.

In this example the pivot point 5222 is directly below the mid-point of the elongate channel 5212. Therefore the elongate channel 5212 is highest in the centre, where the third support arm 5212 is substantially vertical, and lowest towards the fore and aft ends of the channel 5212, where the third support arm 5220 is at an angle. However in alternative embodiments it may be preferred to place the highest point towards one of the ends, such as the forward end, of the elongate channel 5212 (so the other end of the elongate channel 5212 is vertically lower). This may improve the ergonomics of the system. The pivot point 5222 would be placed below the highest point on the elongate channel 5212.

Attached to the bottom end of the third support arm 5220, below the pivot point 5222, is a push-pull rod 5224. The push-pull rod 5224 is positioned longitudinally in the aircraft and remains substantially horizontal. The push-pull rod 5224 is arranged to move with the third support arm 5220 as the third support arm pivots about pivot point 5222. Thus the push-pull rod 5224 moves generally fore and aft in the helicopter.

The push-pull rod 5224 transmits the movement of the third support arm 5220 (and hence the collective handle 5210) towards the mid-section of the helicopter. Below the mid-section of the helicopter the push-pull rod 5224 is attached to a bell crank 5228 to transmit movement upwards via another push and pull rod and a control lever. The control lever is attached to a hydraulic lift control servo 5144, which amplifies and transmits movement to the actuator(s) that control the collective pitch of the helicopter rotor blades, which are generally in or near the rotor head at the top of the helicopter body in or near the swashplate.

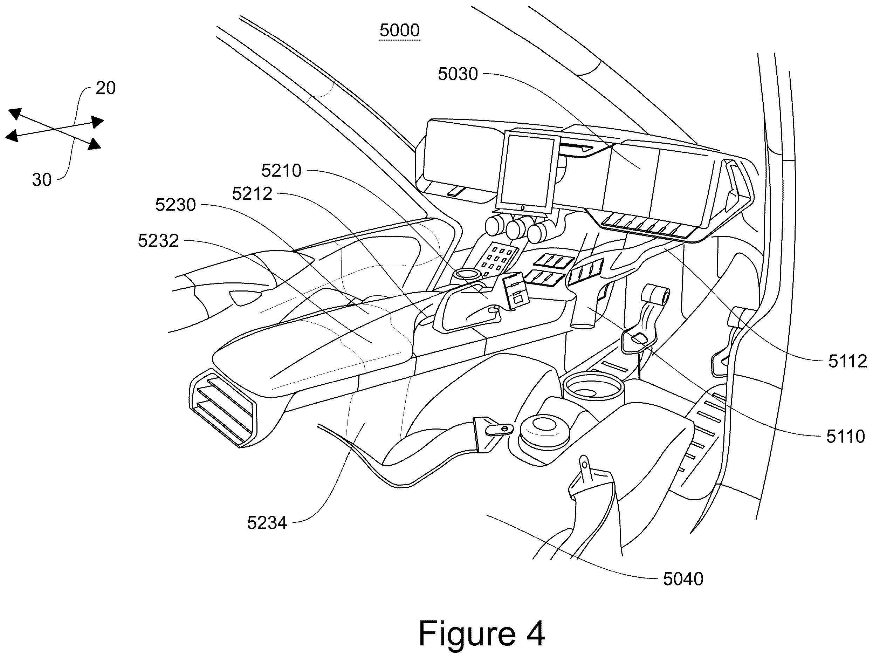

Figure 4 shows a cockpit of an aircraft (for example the helicopter 100 described above), which has the pilot control arrangement 5000 of Figure 3 installed. The full cockpit is not shown in Figure 4. Figure 5 shows a view of the pilot control arrangement 5000 of Figures 3 and 4 in the body of the helicopter 100 from a different angle.

Figure 4 shows a pilot's seat 5040 on the right side of the cockpit. The cockpit of the aircraft comprises an instrument panel 5030 located in front of the pilot's seat 5040.

A cyclic handle 5110 is located above the pilot's seat 5040 and slightly in front of the back of the seat, or seatback such that it can be easily gripped by the pilot. The cyclic handle 5110 is attached to the elongate connector 5112, which extends forward from the cyclic handle 5110.

The elongate transverse arm 5114 is coupled to support arms 5122, 5124 (shown in Figure 3) which transmit longitudinal (or fore and aft) movement of the transverse arm 5114 to one or more actuators that control the pitch, or longitudinal angle of the aircraft, e.g. to bring the nose up or down.

To the left of the pilot's seat 5040 is an armrest 5230. The armrest 5230 is located on top of a central cockpit divider 5234, which extends down the centre of the cockpit in a forward/back direction (longitudinal), from the instrument panel 5030 to the seatback of the pilot's seat 5040. The central cockpit divider 5234 divides the left side of the cockpit from the right side. As is conventional, the pilot's seat 5040 is shown on the right of the cockpit and there is a seat for a co-pilot or passenger on the left of the cockpit. The central cockpit divider 5234 has panelling covering control coupling for the helicopter. For example the third support arm 5220 (shown in Figure 3) is located within the central cockpit divider 5234.

At the back of the armrest 5230 is an elbow support 5232. The elbow support 5232 comprises a generally horizontal surface located at a height to support the pilot's elbow when seated in the pilot's seat 5040. In this example the elbow support portion 5232 is located towards the right hand side of the armrest 5230 and is slightly lower than a horizontal surface on the left of the armrest 5230, which is for a passenger or co-pilot seated in the left-hand seat to rest their arm on.

Forward of the elbow support 5232 is elongate channel 5212, which extends in a generally forwards horizontal direction from the elbow support 5232. The collective handle 5210 is shown, with one end extending in a generally horizontal direction from the elongate channel 5212 such that it is grippable by the pilot. The other end of the collective handle 5210 is slotted in the elongate channel 5212 such that it can slide forward and back within the channel 5212. The elongate channel 5212 in this example is formed in a substantially vertical face of the armrest 5232, which allows the collective handle 5210 to extend from the channel 5212 in a horizontal direction.

As can be seen, the elongate channel 5212 is slightly below the height of the elbow support 5232. This means the top of the collective handle 5210 can be positioned roughly at the same height as the elbow support 5232, so allows the pilot to maintain his elbow on the elbow support 5232 whilst operating the collective handle 5210 in an ergonomic manner.

### Positioning of the Pilot Control Arrangement in the Aircraft Cabin

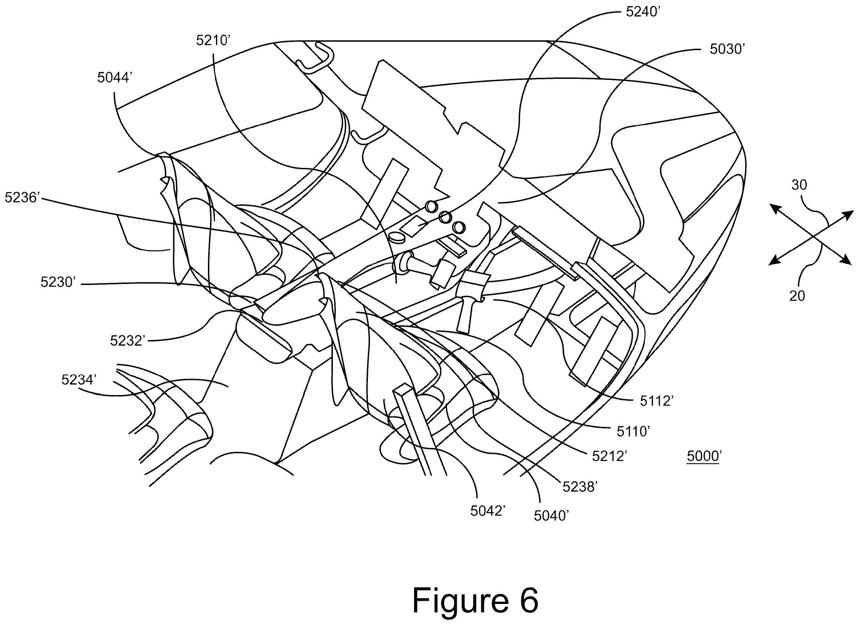

Figure 6 shows a pilot control arrangement 5000', similar to the one shown in Figures 3 to 5, installed in an aircraft cabin, for example the cabin of helicopter 100. Features labelled in Figure 6 by numerals with an additional ' afterwards correspond to the features with the same reference numeral shown in Figures 3 to 5. The corresponding features work in substantially the same manner as those shown in Figures 3 to 5 unless otherwise stated.

A pilot's seat 5040' is located on the right hand side of the cabin, backward of an instrument panel 5030'. The pilot's seat 5040' has a seatback 5042' at the back of the seat. A second seat 5044', for a co-pilot or passenger is located adjacent the pilot's seat 5040', on the left hand side of the cabin. Between the pilot's seat 5040' and the second seat 5044' there is a central cockpit divider 5234'. The cockpit divider 5234' is in line with the centre line (from front to back) of the cockpit (direction shown by arrow 30). As can be seen, the central cockpit divider 5234' extends from a level behind the pilot's seat 5040' and the co-pilot's seat 5044' to forward of the instrument panel 5030'. The width of the central cockpit divider 5234' is about 40cm.

A cyclic handle 5110' is positioned above the pilot's seat 5040' and in front of the seatback 5042'.

An elongate connector 5112' extends forwards from the cyclic handle 5110' and passes under the instrument panel 5030'. The cyclic handle 5110' extends down from the elongate connector 5112' and can be gripped by the pilot, when seated.

On top of the central cockpit divider 5234' is an armrest 5230'. The armrest 5232' comprises an elbow support 5232' towards the back. The armrest 5232' is a generally horizontal surface level with the seatback 5042' of the pilot's seat 5040'. The elbow support 5232' is around 30cm wide (transverse distance across the helicopter) and around 30cm in length. The elbow support 5232' is around 20cm above the height of the seat part of the pilot's seat 5040', to enable the pilot to place their elbow on the elbow support 5232' comfortably when seated.

Forward of the elbow support 5232' the armrest 5230' comprises an upper armrest portion 5236' and an armrest recess 5238'. The upper armrest portion 5236' and the armrest recess 5238' are adjacent to one another, with the upper armrest portion 5236' on the left side of the armrest 5230' and the armrest recess 5238' on the right side of the armrest 5230'. The upper armrest portion 5236' comprises a substantially horizontal surface that continues at roughly the same height/level as the elbow support 5232'. The armrest recess 5238' comprises a substantially horizontal surface below the height/level of the elbow support 5232' and the upper armrest portion 5236'. In this example the horizontal surface of the armrest recess 5238' is around 10cm below the elbow support 5232'.

The upper armrest portion 5236' and the armrest recess 5238' extend forwards from the elbow support 5232' to a user interface portion 5240' of the armrest 5230'. Directly in front of the user interface portion 5240' is the instrument panel 5030'.

Between the elbow support 5232' and the armrest recess 5238' is a substantially vertical surface extending forwards from the elbow support 5232'. In that substantially vertical surface an elongate channel 5212' is formed. The elongate channel 5212' is in a forward/backward direction.

A collective handle 5210' is slidably secured in the elongate channel 5212'. A grippable end of the collective handle 5210' extends from the elongate channel 5212'. The grippable end of the collective handle 5210' extends in a substantially horizontal direction, in this case to the right, such that it is located in the armrest recess 5238'. The collective handle 5210' can be gripped by the pilot's left hand and moved back and forth along the elongate channel 5212'. The length of the elongate channel 5212' is around 30cm. As can be seen, the elongate channel 5212' is slightly curved, so that it is higher in the centre than at the ends. The top of the grippable portion of the collective handle 5210' is roughly level with the horizontal surface of the upper armrest portion 5236'. The pilot can easily operate the collective handle 5210' while resting their elbow on the elbow support 5232'. When not required to operate the collective handle 5210', the pilot may rest their forearm on the upper armrest portion 5236'. However even whilst using the collective 5210' the pilot can position their forearm on the upper armrest portion 5236' and seamlessly slide their forearm along the upper armrest portion 5236' as they move the collective 5210'. This provides arm support irrespective of collective position, or whether the pilot is using the collective, the control panel or at rest.

The user interface portion 5240' of the armrest 5230' comprises user input features, such as numerical keypads, buttons, rotatable knobs and/or rotatable puck selectors, with which the pilot can input certain controls, such as radio control. The user interface portion 5240' of the armrest 5230' is around the same height as the upper armrest portion 5236'. This arrangement allows the pilot to easily switch between inputting commands on the user interface and adjusting the collective pitch of the helicopter blades.

The elbow support 5232', upper armrest portion 5236', armrest recess 5238' and user interface portion 5240' may be formed separately, or formed together as an integrated armrest 5230', or may be formed in one or more integrated combinations. In a preferred embodiment the upper armrest portion 5236' and user interface portion 5240' are formed as a single piece and the elbow support 5232' and armrest recess 5238' are formed as a separate single piece. This aids assembly.

### Dual Control

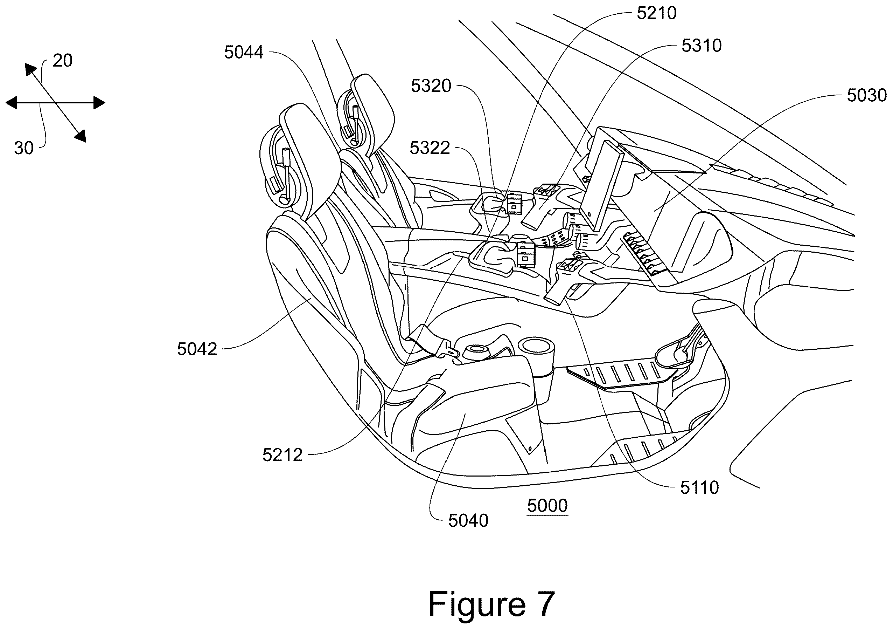

Figure 7 shows a side view of the cabin of Figure 5 from the right hand side of the cabin and shows the pilot control system 5000. An additional set of controls for a co-pilot has been added to the pilot control system 5000.

An additional (auxiliary or further) cyclic handle 5310 is provided in front of and slightly above the second or co-pilot's seat 5033 so that it can be gripped by the co-pilot during flight. A further elongate connector is also provided (not shown in Figure 7), in a mirror image of the first elongate connector 5112. The further elongate connector extends forwardly of the auxiliary cyclic handle. The elongate transverse arm 5114 extends past the central line of the aircraft to meet the further elongate connector, so that motion of both the pilot's cyclic handle 5110 and the co-pilot's cyclic handle 5310 can control movement of the elongate transverse arm 5114.

An auxiliary collective handle 5320 is provided to the left of the co-pilot's seat. Instead of being slidable in a channel, as with the primary collective handle 5210, the auxiliary collective handle 5320 works with a conventional pivoted motion. The auxiliary collective handle 5320 is fixedly attached to a pivot arm 5322, which moves with the auxiliary collective handle 5320 as it is moved up and back (to increase collective pitch of the rotor blades) or forward and down (to decrease collective pitch of the rotor blades).

Advantageously, the second, or auxiliary, set of controls may be removable so that the aircraft can be flown with only one pilot and the auxiliary controls do not get in the way of a passenger who may sit in the co-pilot seat.

The auxiliary collective handle 5320 and pivot arm 5322 are removable. In some embodiments only the auxiliary collective handle 5320 is removable, but the pivot arm 5322 may still impede entry into the aircraft so removal of both is preferred.

The auxiliary cyclic handle 5310 and attached further elongate connector are also removable.

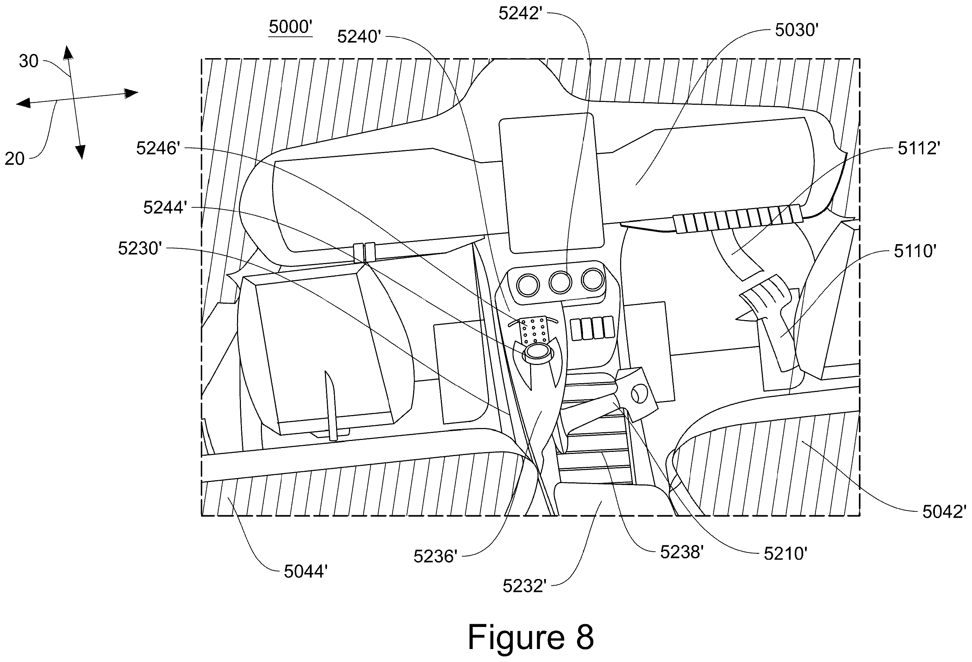

Figure 8 shows the pilot control arrangement 5000' of Figure 6 from above. The user interface portion 5240' can be seen more clearly.

As can be seen, there are three raised forward buttons 5242' at the front end of the user interface portion 5240'. At the left side of the user interface portion 5240' is a rotatable puck selector 5244'. Directly in front of the puck selector 5244' is a keypad 5246' comprising at least four buttons, which may be physical or touchscreen based. These user interface components can be used to input and select options. It may be used in conjunction with displays on the control panel 5030'.

The proximity of the upper armrest portion 5236', the user interface portion 5240' and the collective handle 5210' makes it very easy for the pilot to switch between controlling the collective and programming other aircraft controls, whilst keeping their arm in a comfortable position.

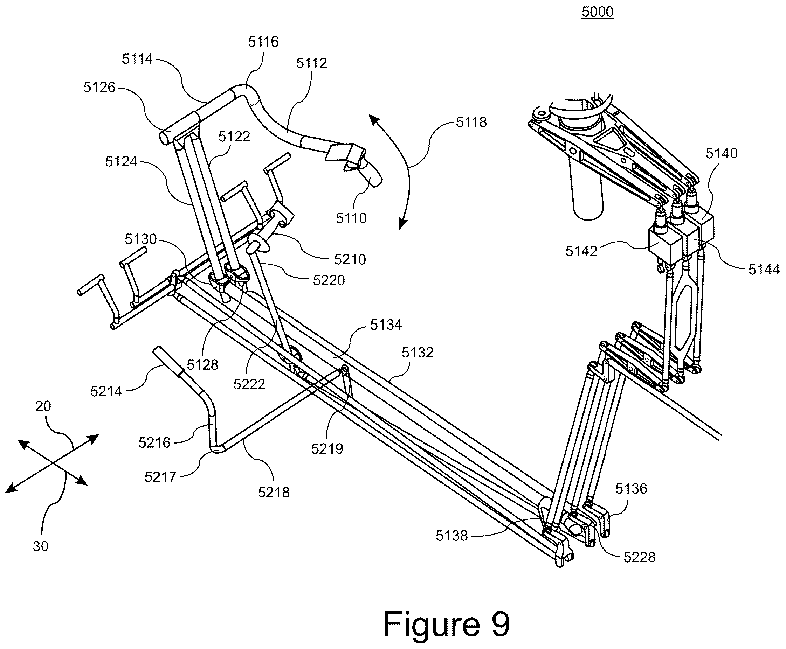

Figure 9 shows the pilot control system 5000 of Figure 3, with an additional collective handle 5214 attached for a co-pilot. All other aspects of the pilot control arrangement are the same as for the pilot control system 5000 of Figure 3 so only the additional features associated with the additional collective handle will be described.

The additional collective handle 5214 is to the left of the cockpit, on the left hand side of the co-pilot's seat. The additional collective handle 5214 is the top part of an additional collective lever 5216. The additional collective lever 5216 is curved such that, while the collective handle 5216 is at an angle between horizontal and vertical, a lower part of the collective lever 5216 is substantially vertical. The bottom end of the collective lever 5216 is pivoted at pivot point 5217. The curvature of the collective lever 5216 means that the motion of the collective handle 5216 can be substantially vertical whilst the collective lever 5216 is pivoted about pivot point 5217.

At the pivot point 5217 the additional collective lever 5216 is connected to a torque tube 5218. The torque tube 5218 is disposed substantially horizontally and transversely across the aircraft and extends from the additional collective lever 5216 at the left side of the cockpit towards the centre of the aircraft. As the additional collective handle is pulled up, the collective lever 5216 is pivoted about pivot point 5217 and this movement is transferred to torque tube 5218.

At its other end, towards the centre of the aircraft the torque tube 5218 is coupled to a push-pull rod 5224a via a bell crank 5219. The push-pull rod 5224a is the same as push-pull rod 5224 shown in Figure 3, except it is a little shorter to allow attachment to the bell crank 5219. The bell crank 5219 is also connected to the third support arm 5220 that is coupled to the primary collective handle 5210. The push-pull rod 5224a extends backwards in the aircraft in the same manner as push-pull rod 5224a.

The push-pull rod 5224a transmits the movement of both the torque tube 5218 (and hence the additional collective handle 5214) and the third support arm 5220 (and hence the collective handle 5210) towards the mid-section of the helicopter. Below the mid-section of the helicopter the push-pull rod 5224 is attached to a bell crank 5228 to transmit movement upwards via another push and pull rod and a control lever. The control lever is attached to a hydraulic lift control servo 5144, which amplifies and transmits movement to the actuator(s) that control the collective pitch of the helicopter rotor blades, which are generally in or near the rotor head at the top of the helicopter body in or near the swashplate.

Whilst the control arrangements 5000 and 5000' have been primarily described with reference to helicopters, it could also be used in fixed wing aircraft, such as aeroplanes.

While a specific architecture is shown, any appropriate hardware/software architecture may be employed. For example, external communication may be via a wired network connection.

The above embodiments and examples are to be understood as illustrative examples. Further aspects or examples are envisaged. Furthermore, modifications not described above may also be employed without departing from the invention, which is defined in the accompanying claims.

## Claims

1. A collective control arrangement for a helicopter having a plurality of rotor blades, the collective control arrangement comprising:
an armrest (5230) for a pilot's seat (5040), the armrest comprising an elongate channel (5212), wherein the elongate channel is arranged to be disposed substantially parallel to a longitudinal axis of the helicopter when installed and is formed in a face of the armrest that is substantially vertical when installed in the helicopter; and
a collective handle (5210) comprising:
a first end slidably disposed in the elongate channel for coupling to one or more helicopter actuators that control collective pitch of the plurality of rotor blades; and
a second end for gripping by a pilot;
wherein the collective handle and elongate channel are arranged such that the collective handle projects substantially horizontally from the armrest.

2. A collective control arrangement according to claim 1, wherein the armrest comprises an armrest recess (5238) and an elbow support portion (5232) configured to be located aft of the armrest recess when the armrest is installed in the helicopter.

3. A collective control arrangement according to claim 2, wherein the elongate channel is positioned below the height of the elbow support portion when the armrest is installed in the helicopter.

4. A collective control arrangement according to claim 2 or 3, wherein the elongate channel and the collective handle are sized and shaped such that the collective handle lies below the height of the elbow support portion when the collective control arrangement is installed in the helicopter.

5. A collective control arrangement according to any preceding claim, wherein the elongate channel is curved.

6. A collective control arrangement according to any preceding claim, further comprising a support arm (5220) connected to the first end of the collective handle for coupling the collective handle to the one or more helicopter actuators that control collective pitch of the plurality of rotor blades.

7. A collective control arrangement according to claim 6, wherein the support arm extends generally downwards from the collective handle when installed in the helicopter, preferably wherein the support arm is of sufficient length to extend below the floor level of the cockpit of the helicopter.

8. A collective control arrangement according to claim 6 or 7, wherein the support arm is pivotally fixable in the helicopter when installed, such that the support arm pivots as the collective handle is slid in the elongate channel.

9. A collective control arrangement according to any of claims 6 to 8, wherein the support arm is substantially hidden or obscured by the armrest.

10. A collective control arrangement according to any preceding claim, wherein the armrest is arranged to be disposed centrally in a cabin of the helicopter and/or comprises one or more user interface buttons adjacent the elongate channel for receiving pilot input.

11. A collective control arrangement according to any preceding claim,
wherein the collective handle is a first collective handle and
wherein the collective control arrangement further comprises:
a further collective handle comprising:
a first end pivotably fixable about a pivot point; and
a second end for gripping by a co-pilot;
a coupling mechanism for coupling the second end of the further collective handle to the one or more helicopter actuators that control collective pitch of the plurality of rotor blades, such that moving of the second end of the further collective handle by the co-pilot to cause rotation of the first end about the pivot point effects control of the collective pitch of the plurality of rotor blades.

12. A collective control arrangement according to claim 11, wherein the pivot point of the further collective handle is aft of a pivot point associated with the first collective handle, preferably wherein the pivot point associated with the first collective handle is a pivot point about which a support arm connected to the first collective handle is pivoted.

13. A collective control arrangement according to claim 11 or 12, wherein the coupling mechanism further comprises:
a horizontally disposed torque tube coupled to the further collective handle and to a control rod coupled to the first collective handle.

14. A helicopter cabin for a helicopter (100) having a plurality of rotor blades (2102), wherein the helicopter cabin is fitted with the collective control arrangement of any preceding claim.

15. A helicopter (100) having a plurality of rotor blades (2102) and fitted with the collective control arrangement of any of claims 1 to 13.

## Patentansprüche

1. Kollektive Steueranordnung für einen Hubschrauber mit einer Vielzahl von Rotorblättern, wobei die kollektive Steueranordnung umfasst:
eine Armlehne (5230) für einen Pilotensitz (5040), wobei die Armlehne einen länglichen Kanal (5212) umfasst, wobei der längliche Kanal so angeordnet ist, dass er im Wesentlichen parallel zu einer Längsachse des Hubschraubers verläuft, wenn sie installiert ist, und in einer Fläche der Armlehne ausgebildet ist, die im Wesentlichen vertikal ist, wenn sie im Hubschrauber installiert ist; und
einen kollektiven Griff (5210), der umfasst:
ein erstes Ende, das verschiebbar im länglichen Kanal angeordnet ist, um es mit einem oder mehreren Hubschrauberaktuatoren zu verbinden, die kollektive Neigung der Vielzahl von Rotorblättern steuern; und
ein zweites Ende zum Greifen durch einen Piloten;
wobei der kollektive Griff und der längliche Kanal so angeordnet sind, dass der kollektive Griff im Wesentlichen horizontal von der Armlehne vorsteht.

2. Kollektive Steueranordnung nach Anspruch 1, wobei die Armlehne eine Armlehnenaussparung (5238) und einen Ellbogenstützabschnitt (5232) umfasst, der so konfiguriert ist, dass er sich hinter der Armlehnenaussparung befindet, wenn die Armlehne im Hubschrauber installiert ist.

3. Kollektive Steueranordnung nach Anspruch 2, wobei der längliche Kanal unterhalb der Höhe des Ellbogenstützabschnitts positioniert ist, wenn die Armlehne im Hubschrauber installiert ist.

4. Kollektive Steueranordnung nach Anspruch 2 oder 3, wobei der längliche Kanal und der kollektive Griff so bemessen und geformt sind, dass der kollektive Griff unterhalb der Höhe des Ellbogenstützabschnitts liegt, wenn die kollektive Steueranordnung im Hubschrauber installiert ist.

5. Kollektive Steueranordnung nach einem der vorhergehenden Ansprüche, wobei der längliche Kanal gekrümmt ist.

6. Kollektive Steueranordnung nach einem der vorhergehenden Ansprüche, die ferner einen mit dem ersten Ende des kollektiven Griffs verbundenen Stützarm (5220) umfasst, um den kollektiven Griff mit einem oder mehreren Hubschrauberaktuatoren zu verbinden, die kollektive Neigung der Vielzahl von Rotorblättern steuern.

7. Kollektive Steueranordnung nach Anspruch 6, wobei sich der Stützarm im Allgemeinen vom kollektiven Griff nach unten erstreckt, wenn er im Hubschrauber installiert ist, wobei der Stützarm vorzugsweise lang genug ist, um sich bis unter die Bodenhöhe des Cockpits des Hubschraubers zu erstrecken.

8. Kollektive Steueranordnung nach Anspruch 6 oder 7, wobei der Stützarm schwenkbar im Hubschrauber befestigt ist, wenn er im Hubschrauber installiert ist, so dass der Stützarm schwenkt, wenn der kollektive Griff in den länglichen Kanal geschoben wird.

9. Kollektive Steueranordnung nach einem der Ansprüche 6 bis 8, wobei der Stützarm im Wesentlichen durch die Armlehne verborgen oder verdeckt ist.

10. Kollektive Steueranordnung nach einem der vorhergehenden Ansprüche, wobei die Armlehne so angeordnet ist, dass sie zentral in einer Kabine des Hubschraubers angeordnet ist und/oder eine oder mehrere Benutzerschnittstellentasten neben dem länglichen Kanal zum Empfangen von Piloteneingaben umfasst.

11. Kollektive Steueranordnung nach einem der vorhergehenden Ansprüche, wobei der kollektive Griff ein erster kollektiver Griff ist, und wobei die kollektive Steueranordnung ferner umfasst:
einen weiteren kollektiven Griff, der umfasst:
ein erstes Ende, das um einen Drehpunkt schwenkbar befestigt ist; und
ein zweites Ende zum Greifen durch einen Copiloten;
einen Kopplungsmechanismus zum Verbinden des zweiten Endes des weiteren kollektiven Griffs mit dem einen oder den mehreren Hubschrauberaktuatoren, die kollektive Neigung der Vielzahl von Rotorblättern steuern, so dass durch Bewegen des zweiten Endes des weiteren kollektiven Griffs durch den Copiloten, um eine Drehung des ersten Endes um den Drehpunkt zu bewirken, die Steuerung der kollektiven Neigung der Vielzahl von Rotorblättern bewirkt wird.

12. Kollektive Steueranordnung nach Anspruch 11, wobei der Drehpunkt des weiteren kollektiven Griffs hinter einem Drehpunkt liegt, der dem ersten kollektiven Griff zugeordnet ist, wobei der Drehpunkt, der dem ersten kollektiven Griff zugeordnet ist, vorzugsweise ein Drehpunkt ist, um den ein mit dem ersten kollektiven Griff verbundener Stützarm geschwenkt wird.

13. Kollektive Steueranordnung nach Anspruch 11 oder 12, wobei der Kopplungsmechanismus ferner umfasst:
ein horizontal angeordnetes Drehmomentrohr, das mit dem weiteren kollektiven Griff und mit einer Steuerstange verbunden ist, die mit dem ersten kollektiven Griff verbunden ist.

14. Hubschrauberkabine für einen Hubschrauber (100) mit einer Vielzahl von Rotorblättern (2102), wobei die Hubschrauberkabine mit der kollektiven Steueranordnung nach einem der vorhergehenden Ansprüche ausgestattet ist.

15. Hubschrauber (100) mit einer Vielzahl von Rotorblättern (2102), der mit der kollektiven Steueranordnung nach einem der Ansprüche 1 bis 13 ausgestattet ist.

## Revendications

1. Agencement de commande collective pour un hélicoptère présentant une pluralité de pales de rotor, l'agencement de commande collective comprenant :
un accoudoir (5230) pour un siège de pilote (5040), l'accoudoir comprenant un canal allongé (5212), dans lequel le canal allongé est agencé pour être disposé sensiblement parallèlement à un axe longitudinal de l'hélicoptère lorsqu'il est installé et est formé dans une face de l'accoudoir qui est sensiblement verticale lorsqu'il est installé dans l'hélicoptère ; et
une poignée de collectif (5210) comprenant :
une première extrémité disposée de manière coulissante dans le canal allongé pour le couplage à un ou plusieurs actionneur(s) d'hélicoptère qui commande/commandent le pas collectif de la pluralité de pales de rotor ; et
une deuxième extrémité destinée à être saisie par un pilote ;
dans lequel la poignée de collectif et le canal allongé sont agencés de telle sorte que la poignée de collectif fait saillie de manière sensiblement horizontale à partir de l'accoudoir.

2. Agencement de commande collective selon la revendication 1, dans lequel l'accoudoir comprend un creux d'accoudoir (5238) et une partie de support de coude (5232) configurée pour être située à l'arrière du creux d'accoudoir lorsque l'accoudoir est installé dans l'hélicoptère.

3. Agencement de commande collective selon la revendication 2, dans lequel le canal allongé est positionné en dessous de la hauteur de la partie de support de coude lorsque l'accoudoir est installé dans l'hélicoptère.

4. Agencement de commande collective selon la revendication 2 ou 3, dans lequel le canal allongé et la poignée de collectif sont dimensionnés et formés de telle sorte que la poignée de collectif se trouve en dessous de la hauteur de la partie de support de coude lorsque l'agencement de commande collective est installé dans l'hélicoptère.

5. Agencement de commande collective selon l'une des revendications précédentes, dans lequel le canal allongé est incurvé.

6. Agencement de commande collective selon l'une des revendications précédentes, comprenant en outre un bras de support (5220) relié à la première extrémité de la poignée de collectif pour coupler la poignée de collectif à l'un ou plusieurs actionneur(s) d'hélicoptère qui commande/commandent le pas collectif de la pluralité de pales de rotor.

7. Agencement de commande collective selon la revendication 6, dans lequel le bras de support s'étend généralement vers le bas à partir de la poignée de collectif lorsqu'il est installé dans l'hélicoptère, de préférence dans lequel le bras de support présente une longueur suffisante pour s'étendre en dessous du niveau de plancher du cockpit de l'hélicoptère.

8. Agencement de commande collective selon la revendication 6 ou 7, dans lequel le bras de support peut être fixé de manière pivotante dans l'hélicoptère lorsqu'il est installé, de telle sorte que le bras de support pivote au fur et à mesure que la poignée de collectif coulisse dans le canal allongé.

9. Agencement de commande collective selon l'une des revendications 6 à 8, dans lequel le bras de support est sensiblement caché ou occulté par l'accoudoir.

10. Agencement de commande collective selon l'une des revendications précédentes, dans lequel l'accoudoir est agencé pour être disposé centralement dans une cabine de l'hélicoptère et/ou comprend un ou plusieurs bouton(s) d'interface utilisateur adjacent(s) au canal allongé pour recevoir une entrée pilote.

11. Agencement de commande collective selon l'une des revendications précédentes, dans lequel la poignée de collectif est une première poignée de collectif et dans lequel l'agencement de commande collective comprend en outre :
une autre poignée de collectif comprenant :
une première extrémité pouvant être fixée de manière pivotante autour d'un point de pivotement ; et
une deuxième extrémité destinée à être saisie par un copilote ;
un mécanisme de couplage pour coupler la deuxième extrémité de l'autre poignée de collectif à l'un ou plusieurs actionneur(s) d'hélicoptère qui commande/commandent le pas collectif de la pluralité de pales de rotor, de telle sorte que le déplacement de la deuxième extrémité de l'autre poignée de collectif par le copilote pour provoquer la rotation de la première extrémité autour du point de pivot applique une commande du pas collectif de la pluralité de pales de rotor.

12. Agencement de commande collective selon la revendication 11, dans lequel le point de pivotement de l'autre poignée de collectif est à l'arrière d'un point de pivotement associé à la première poignée de collectif, de préférence dans lequel le point de pivotement associé à la première poignée de collectif est un point de pivotement autour duquel un bras de support relié à la première poignée de collectif est pivoté.

13. Agencement de commande collective selon la revendication 11 ou 12, dans lequel le mécanisme de couplage comprend en outre :
un tube de torsion disposé horizontalement couplé à l'autre poignée de collectif et à une tige de commande couplée à la première poignée de collectif.

14. Cabine d'hélicoptère pour un hélicoptère (100) présentant une pluralité de pales de rotor (2102), dans laquelle la cabine d'hélicoptère est équipée de l'agencement de commande collective selon l'une des revendications précédentes.

15. Hélicoptère (100) présentant une pluralité de pales de rotor (2102) et équipé de l'agencement de commande collective selon l'une des revendications 1 à 13.
